# EUROPÄISCHE PATENTANMELDUNG

(11) **EP 1 229 316 A1**
(43) Veröffentlichungstag der Anmeldung: **07.08.2002**
(21) Anmeldenummer: 02002101.0
(22) Anmeldetag: 28.01.2002
(51) Int. Cl.: G01K 13/02, G01W 1/17

(54) **Messeinrichtung zur Erfassung der Kühlwirkung eines Warenpräsentationsmöbels**

(30) Priorität: 06.02.2001 DE 10105245
(71) Anmelder: Linde AG, 65189 Wiesbaden (DE)
(72) Erfinder: Spettmann, Ines, 55130 Mainz (DE); Möller, Bernhard, 65468 Astheim (DE)

(57) **Zusammenfassung**

Es wird eine Messeinrichtung (1) zur Erfassung der Kühlwirkung eines aus einem Warenpräsentationsmöbel, insbesondere einem (Tief)Kühlregal, nach vorne herausfallenden Kühlluftstromes, mit
- wenigstens einem Messpaket (3),
- Mitteln zum Beheizen des oder der Messpakete (3) und
- in und/oder an dem oder den Messpaketen (3) angeordneten Messfühlem (4) beschrieben.

Femer werden zwei Verfahren zum Erfassung der Kühlwirkung eines aus einem Warenpräsentationsmöbel, insbesondere einem (Tief)Kühlregal, nach vorne herausfallenden Kühlluftstromes, mit der vorgenannten Messeinrichtung beschrieben.

## Beschreibung

Die Erfindung betrifft eine Messeinrichtung zur Erfassung der Kühlwirkung eines aus einem Warenpräsentationsmöbel, insbesondere einem (Tief)Kühlregal, nach vorne herausfallenden Kühlluftstromes.

Ferner betrifft die Erfindung ein Verfahren zum Erfassung der Kühlwirkung eines aus einem Warenpräsentationsmöbel, insbesondere einem (Tief)Kühlregal, nach vorne herausfallenden Kühlluftstromes, mit einer Messeinrichtung.

Aus bestimmten Typen von Warenpräsentationsmöbeln, insbesondere aus (Tief)Kühlregalen fällt ein Teilstrom der kalten Kühlluft aus dem Möbel heraus und sammelt sich am Boden vor dem Warenpräsentationsmöbel, was zu einer Bildung eines sog. Kaltluftsees führt. Kunden, die an das Warenpräsentationsmöbel herantreten, gelangen in den Bereich dieses Kaltluftsees, was insbesondere in den wärmeren Jahreszeiten, in denen die Bekleidung dünner ist, als unangenehm empfunden wird.

Bei der Neuentwicklung und Prüfung von Warenpräsentationsmöbeln wird dieser als unangenehm empfundene Effekt bisher gar nicht oder nur in einem sehr geringen Maße beachtet. Die aus einem Warenpräsentationsmöbel austretende bzw. herausfallende kalte Kühlluft kann in ihrer Wirkung auf den menschlichen Körper bisher nicht erfasst werden. Erfasst werden können - mittels entsprechender Sensoren - lediglich die Kühllufttemperatur sowie deren Strömungsgeschwindigkeit.

Aufgabe der vorliegenden Erfindung ist es, eine Messeinrichtung sowie ein Verfahren zum Erfassen der Kühlwirkung eines aus einem Warenpräsentationsmöbel insbesondere einem (Tief)Kühlregal, nach vorne herausfallenden Kühlluftstromes.

Zur Lösung dieser Aufgabe wird eine Messeinrichtung vorgeschlagen, die
- wenigstens ein Messpaket,
- Mittel zum Beheizen des oder der Messpakete und
- in und/oder an dem oder den Messpaketen angeordnete Messfühler aufweist.

Zur Lösung der obengenannten Aufgabe werden des Weiteren zwei Verfahrensalternativen vorgeschlagen, wobei die erste Alternative die folgenden Schritte umfasst:
a) Zuführen einer Heizleistung zu dem oder den Messpaketen, so dass in dem oder den Messpaketen eine Temperatur T eingestellt wird
b) Anordnen der Messeinrichtung vor einem Warenpräsentationsmöbel derart, dass der aus dem Warenpräsentationsmöbel herausfallende Kühlluftstrom die Messeinrichtung umströmt oder zumindest an ihr entlangströmt
c) Konstantes Zuführen der im Schritt a) zugeführten Heizleistung solange, bis sich in der Messeinrichtung eine durch den Kühlluftstrom verursachte konstante mittlere Temperatur Tₘ eingestellt hat
d) Ermittlung der Temperaturdifferenz ΔT zwischen den Temperaturen T und Tₘ

Eine zweite alternative Verfahrensweise umfasst folgenden Schritte:
a') Zuführen einer Heizleistung P₁ zu dem oder den Messpaketen, so dass in dem oder den Messpaketen eine Temperatur T eingestellt wird
b') Anordnen der Messeinrichtung vor einem Warenpräsentationsmöbel derart, dass der aus dem Warenpräsentationsmöbel herausfallende Kühlluftstrom die Messeinrichtung umströmt oder zumindest an ihr entlangströmt
c') Zuführen einer Heizleistung P₂ solange, bis sich in der Messeinrichtung wieder die Temperatur T eingestellt hat
d') Ermittlung der Heizleistungsdifferenz ΔP zwischen den Heizleistungen P₁ und P₂

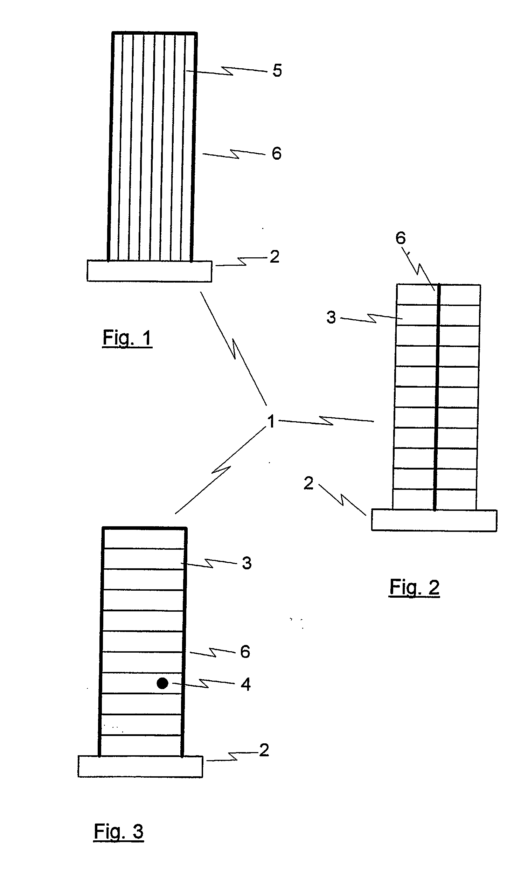

Die erfindungsgemäße Messeinrichtung zur Erfassung der Kühlwirkung eines aus einem Warenpräsentationsmöbel, insbesondere einem (Tief)Kühlregal, nach vorne herausfallenden Kühlluftstromes sowie weitere Ausgestaltungen derselben, seien anhand der in den Figuren 1 bis 3 dargestellten Ausführungsform näher erläutert.

Die Figuren 1 und 3 zeigen eine Front- bzw. Rückansicht der erfindungsgemäßen Messeinrichtung, wie sie dem Warenpräsentationsmöbel zugewandt aufgestellt wird.

Auf einer vorzugsweise isoliert ausgebildeten Grundplatte 2 sind vorzugsweise mehrere Messpakete 3 übereinander angeordnet. Diese Messpakete 3 bestehen vorzugsweise aus einem Material, das ähnliche thermodynamische Eigenschaften wie Fleisch aufweist. Es ist daher zweckmäßig, wenn die Messpakete zumindest teilweise aus einem Material nach der Norm EN 441 und/oder zumindest teilweise aus einem Material, das im Wesentlichen äquivalente thermodynamische Eigenschaften aufweist, hergestellt sind; dabei ist es nicht zwingend erforderlich, dass die Messpakete 3 vollständig aus diesem Material gefertigt sind.

Die Messpakete 3 können von einem Rahmen 6 umgeben sein, der sie im Wesentlichen zusammenhält. Dabei ist jedoch darauf zu achten, dass die Messpakete 3 nicht vollständig von dem Rahmen 6 umgeben sind, da sie ansonsten nicht mehr unmittelbar der (Kühl)Luftströmung ausgesetzt wären. Der Rahmen 6 kann bspw. aus Blech oder einem beliebigen Material bestehen.

Die Messvorrichtung 1 weist Mittel zum Beheizen der Messpakete 3 auf, die beispielsweise als eine elektrische Heizung - in der Figur 1 dargestellt durch die Heizdrähte 5 - ausgebildet sind. Die Heizleistung dieser Mittel zum Beheizen ist vorzugsweise regelbar ausgebildet. Die Heizdrähte 5 können beispielsweise in der gleichen Ebene wie der Blechrahmen 6 angeordnet werden.

Die Figur 2 zeigt eine seitliche Darstellung der in den Figuren 1 und 3 dargestellten Ausführungsform der erfindungsgemäßen Messeinrichtung. Erkennbar sind wiederum die Messpakete 3, die auf der Grundplatte 2 angeordnet sind, sowie der Rahmen 6.

Ferner sind in den Messpaketen 3 Messfühler angeordnet; in der Figur 3 ist der Übersichtlichkeit halber lediglich ein Messfühler 4 in einem Messpaket 3 dargestellt. Selbstverständlich können eine Vielzahl derartiger Messfühler 4 an den dafür geeigneten Stellen vorgesehen werden.

Die erfindungsgemäße Messeinrichtung weist beispielsweise eine Höhe von ca. 1 m und eine Breite sowie Tiefe von ca. 20 cm auf. Diese Dimensionierung ist ausreichend, um den menschlichen Körper bzw. die Einflüsse des aus dem Warenpräsentationsmöbel herausfallenden Kühlluftstromes auf den menschlichen Körper zu simulieren.

Wird eine elektrische Heizung mit entsprechenden Heizleitungen 5, wie sie in der Figur 1 dargestellt sind, vorgesehen, so ist deren ohmscher Widerstand bekannt. Die Stromspannung wird über den Transformator verändert und geregelt, so dass die abgegebene Heizleistung variiert werden kann. Ihre Ermittlung erfolgt über die Formel P = U²/R.

Die bereits erwähnten Messfühler 4 sind vorzugsweise als Thermoelemente ausgebildet. Sie sind zumindest soweit von der Heizung bzw. den Heizdrähten 5 entfernt anzuordnen, dass sie durch diese nicht negativ beeinflusst werden.

Nachfolgend seien die beiden alternativen Verfahren zum Erfassen der Kühlwirkung eines aus einem Warenpräsentationsmöbel, insbesondere einem (Tief)Kühlregal, nach vorne herausfallenden Kühlluftstromes beschrieben. Bei beiden Verfahrensweisen ist jedoch darauf zu achten, dass die Umgebungsbedingungen und Parameter, bei denen das Warenpräsentationsmöbel betrieben wird bzw. werden soll, auch während des Messverfahrens eingehalten werden.

Entsprechend der ersten Alternative des Messverfahrens wird dem oder den Messpaketen 3 eine definierte Heizleistung zugeführt, so dass in den Messpaketen 3 eine bestimmte Temperatur T eingestellt wird. Sollte die Messeinrichtung 1 während dieses Verfahrensschrittes bereits vor dem zu prüfenden Warenpräsentationsmöbel angeordnet sein, so darf dieses noch nicht betrieben werden. Ist die Messeinrichtung 1 noch nicht vor dem Warenpräsentationsmöbel angeordnet, so geschieht dies nun und zwar dergestalt, dass der aus dem Warenpräsentationsmöbel herausfallende Kühlluftstrom die Messeinrichtung 1 umströmt oder zumindest an ihr entlang strömt.

Die eingestellte Temperatur T liegt vorzugsweise in einem Bereich zwischen 35 und 38 °C, insbesondere wird angestrebt, einen Temperaturwert von 36,5 °C einzustellen, da dieser der menschlichen Körpertemperatur entspricht und damit am aussagekräftigsten ist.

Die aus dem Warenpräsentationsmöbel herausfallende Kühlluft kühlt nun die Messpakete 3 stetig ab. Weiterhin wird diejenige Heizleistung, die zu Beginn des Messverfahrens zum Erreichen der Temperatur T erforderlich war, zugeführt. Sobald sich in der Messeinrichtung 1 eine durch den Kühlluftstrom verursachte konstante, niedrigere mittlere Temperatur Tₘ eingestellt hat, erfolgt eine Ermittlung der Temperaturdifferenz ΔT zwischen den Temperaturen T und Tₘ.

Aus dieser ermittelten Temperaturdifferenz ΔT können nun Rückschlüsse auf die Kühlwirkung des Warenpräsentationsmöbels auf einen vor dem Warenpräsentationsmöbel stehenden Kunden geschlossen werden. Je größer die ermittelte Temperaturdifferenz ΔT ist, umso kälter empfindet der vor dem Warenpräsentationsmöbel stehende Kunde den vorbeschriebenen Kaltluftsee bzw. den aus dem Warenpräsentationsmöbel herausfallenden Kühlluftstrom.

Bei der zweiten Variante des erfindungsgemäßen Messverfahrens zur Erfassung der Kühlwirkung wird wiederum - bei ausgeschaltetem Warenpräsentationsmöbel - dem oder den Messpaketen 3 eine Heizleistung P₁ zugeführt, so dass in dem oder den Messpaketen eine Temperatur T eingestellt wird.

Nunmehr wird - sofern dies noch nicht geschehen ist - die Messeinrichtung vor dem Warenpräsentationsmöbel derart angeordnet, dass der aus dem Warenpräsentationsmöbel herausfallende Kühlluftstrom die Messeinrichtung 1 umströmt oder zumindest an ihr entlang strömt. Anschließend wird, da die Temperatur in dem oder den Messpaketen 3 absinkt, eine bestimmte Heizleistung P₂ solange zugeführt, bis in der Messeinrichtung 1 bzw. dem oder den Messpaketen 3 wieder die im ersten Schritt eingestellte Temperatur T erreicht wird. Sobald dies geschehen ist, wird die Heizleistungsdifferenz ΔP zwischen den Heizleistungen P₁ und P₂ ermittelt.

Auch bei dieser Verfahrensweise gilt, dass ein Kunde den Kühlluftsee bzw. die aus dem Warenpräsentationsmöbel austretende Kühlluft als um so unangenehmer empfindet, je größer die Heizleistungsdifferenz ΔP ist .

## Patentansprüche

1. Messeinrichtung (1) zur Erfassung der Kühlwirkung eines aus einem Warenpräsentationsmöbel, insbesondere einem (Tief)Kühlregal, nach vorne herausfallenden Kühlluftstromes, mit
- wenigstens einem Messpaket (3),
- Mitteln zum Beheizen des oder der Messpakete (3) und
- in und/oder an dem oder den Messpaketen (3) angeordneten Messfühlem (4).

2. Messeinrichtung nach Anspruch 1, **dadurch gekennzeichnet, dass** die Mitteln zum Beheizen des oder der Messpakete (3) hinsichtlich der zuführbaren Heizleistung regelbar ausgebildet sind.

3. Messeinrichtung nach Anspruch 1 oder 2, **dadurch gekennzeichnet, dass** das oder die Messpakete (3) zumindest teilweise aus einem Material nach der Norm EN 441 und/oder zumindest teilweise aus einem Material, das im Wesentlichen äquivalente thermodynamische Eigenschaften aufweist, bestehen.

4. Messeinrichtung nach einem der Ansprüche 1 bis 3, **dadurch gekennzeichnet, dass** das oder die Messpakete (3) auf einer isolierenden Grundplatte (2) angeordnet sind.

5. Verfahren zum Erfassung der Kühlwirkung eines aus einem Warenpräsentationsmöbel, insbesondere einem (Tief)Kühlregal, nach vorne herausfallenden Kühlluftstromes, mit einer Messeinrichtung (1) nach einem der vorhergehenden Ansprüche, umfassend die folgenden Schritte:
a) Zuführen einer Heizleistung zu dem oder den Messpaketen (3), so dass in dem oder den Messpaketen (3) eine Temperatur T eingestellt wird
b) Anordnen der Messeinrichtung (1) vor einem Warenpräsentationsmöbel derart, dass der aus dem Warenpräsentationsmöbel herausfallende Kühlluftstrom die Messeinrichtung (1) umströmt oder zumindest an ihr entlangströmt
c) Konstantes Zuführen der im Schritt a) zugeführten Heizleistung solange, bis sich in der Messeinrichtung (1) eine durch den Kühlluftstrom verursachte konstante mittlere Temperatur Tₘ eingestellt hat
d) Ermittlung der Temperaturdifferenz ΔT zwischen den Temperaturen T und Tₘ

6. Verfahren zum Erfassung der Kühlwirkung eines aus einem Warenpräsentationsmöbel, insbesondere einem (Tief)Kühlregal, nach vorne herausfallenden Kühlluftstromes, mit einer Messeinrichtung (1) nach einem der vorhergehenden Ansprüche, umfassend die folgenden Schritte:
a') Zuführen einer Heizleistung P₁ zu dem oder den Messpaketen (3), so dass in dem oder den Messpaketen (3) eine Temperatur T eingestellt wird
b') Anordnen der Messeinrichtung (1) vor einem Warenpräsentationsmöbel derart, dass der aus dem Warenpräsentationsmöbel herausfallende Kühlluftstrom die Messeinrichtung (1) umströmt oder zumindest an ihr entlangströmt
c') Zuführen einer Heizleistung P₂ solange, bis sich in der Messeinrichtung (1) wieder die Temperatur T eingestellt hat
d') Ermittlung der Heizleistungsdifferenz ΔP zwischen den Heizleistungen P₁ und P₂

7. Verfahren nach Anspruch 5 oder 6, **dadurch gekennzeichnet, dass** die Temperatur T im Bereich zwischen 35 und 38 °C liegt.
